# FASCICULE DE BREVET EUROPEEN

(11) **EP 1 240 052 B1**
(45) Date de publication et mention de la délivrance du brevet: **31.05.2006**
(21) Numéro de dépôt: 01960857.9
(22) Date de dépôt: 01.08.2001
(51) Int. Cl.: B60N 2/46

(54) **ACCOUDOIR ORIENTABLE POUR PAROI INTERIEURE DE VEHICULE AUTOMOBILE**
VERSTELLBARE ARMLEHNE FÜR EINE KRAFTFAHRZEUGINNENWAND
ADJUSTABLE ARMREST FOR MOTOR VEHICLE INSIDE PANEL

(30) Priorité: 02.08.2000 FR 0010214
(43) Date de publication de la demande: 18.09.2002
(73) Titulaire: Faurecia Industries, 92100 Boulogne-Billancourt (FR)
(72) Inventeur: HERANNEY, Yves, F-25200 Montbéliard (FR)
(74) Mandataire: Jacobson, Claude
(86) Numéro de dépôt international: PCT/FR2001/002515
(87) Numéro de publication internationale: WO 2002/009970

(56) Documents cités:
- DE-A- 4 002 242
- US-A- 1 892 048
- US-A- 2 325 292
- US-A- 3 038 757
- US-A- 4 619 478
- US-A- 4 659 135

## Description

L'invention concerne un accoudoir de paroi intérieure de véhicule automobile, notamment de porte, de forme allongée suivant un axe principal longitudinal, présentant une première région d'extrémité selon cet axe, ladite première région d'extrémité étant reliée à la paroi par l'intermédiaire d'un organe de liaison, l'organe de liaison définissant une liaison pivot autour d'un axe transversal sensiblement horizontal, permettant un débattement angulaire de l'accoudoir par rapport à la paroi, l'accoudoir comportant un organe de verrouillage coopérant avec une pièce d'arrêt solidaire de la paroi, adapté pour maintenir de façon modifiable l'accoudoir dans une position angulaire sélectionnée (cf. par exemple US-A-4 619 478).

En général, les accoudoirs solidaires d'une paroi de véhicule sont soit formés directement dans l'habillage intérieur de la porte, lequel est réalisé le plus souvent par moulage d'une seule pièce en matériau plastique rigide, soit formés par une pièce rapportée fixée rigidement à demeure sur la paroi.

De telles conceptions ne permettent pas d'ajuster la position de l'accoudoir en fonction de l'utilisateur. Il en résulte pour ce dernier des conditions de confort qui ne sont pas optimales.

Dans certains véhicules haut de gamme, il est prévu un accoudoir central réglable, souvent par des moyens coûteux et encombrants non transposables à des accoudoirs de porte.

L'un des buts principaux de l'invention est de remédier à ces inconvénients et de proposer un accoudoir de paroi qui soit réglable en position, de façon qu'un utilisateur puisse ajuster une partie d'appui en hauteur par rapport à la paroi. Un autre but est de réaliser un accoudoir de ce type qui soit simple de fabrication et d'utilisation.

A cet effet, l'organe de liaison selon l'invention est situé dans ladite première région d'extrémité.

Suivant d'autres caractéristiques :
- la pièce d'arrêt et l'organe de verrouillage comportent des crans et des dents complémentaires, radiaux par rapport à l'axe de pivotement, lesdits crans et dents présentant plusieurs positions relatives et étant accouplés et désaccouplés suivant un mouvement relatif de translation sensiblement longitudinal ;
- la pièce d'arrêt comporte au moins un cran, tandis que l'organe de verrouillage comporte une pluralité de dents ;
- la pièce d'arrêt est fixe par rapport à la paroi et l'organe de verrouillage comprend une tige coulissante par rapport à l'accoudoir suivant une direction sensiblement longitudinale ;
- un ressort de rappel agissant dans la direction de coulissement de la tige relie ladite tige à l'accoudoir, de façon à appliquer un effort tendant à accoupler les crans et dents ;
- l'accoudoir présente un volume intérieur creux dans lequel s'étendent la pièce d'arrêt et au moins une partie de l'organe de verrouillage portant les dents, une partie d'extrémité de la tige débouchant sur une face supérieure de l'accoudoir de façon à constituer un organe de manoeuvre ;
- l'organe de liaison comporte un arbre monté rotatif dans un trou complémentaire d'une pièce de fixation solidaire de la paroi, et une bague de friction emmanchée sur ledit arbre et portant sur une paroi attenante de la pièce de fixation de façon à exercer un couple résistant à l'encontre du pivotement de l'accoudoir par rapport à la paroi ;
- la bague de friction est réalisée dans un matériau élastique souple, notamment du caoutchouc ;
- l'accoudoir comporte un organe de préhension solidaire, qui présente une tige en arc de cercle centré sur l'axe de pivotement de l'accoudoir, engagée dans un trou ménagé dans un bras sensiblement horizontal d'une pièce de transmission de force solidaire de la paroi, de façon que la tige puisse coulisser librement dans le trou avec un faible jeu radial ; et
- l'organe de préhension est une pièce rapportée creuse fixée à l'accoudoir dans un évidement complémentaire, la tige étant orientée vers le bas et s'étendant pour l'essentiel dans un évidement d'accoudoir adapté pour recevoir au moins la partie perforée du bras de la pièce de transmission de force.

L'invention vise également un véhicule automobile comportant un accoudoir tel que décrit précédemment.

Un exemple de réalisation de l'invention va maintenant être décrit en regard des dessins annexés, sur lesquels :
- la Figure 1 est une vue en plan schématique de la paroi intérieure d'une porte de véhicule automobile, équipée d'un accoudoir suivant l'invention ;
- la Figure 2 est une vue en coupe dans un plan longitudinal médian de l'accoudoir seul représenté à la Figure 1 ;
- la Figure 2A montre, à plus grande échelle, le détail A de la Figure 2;
- la Figure 3 est une vue en coupe suivant la ligne 3-3, à plus grande échelle, de l'accoudoir et de la garniture d'habillage représentés à la Figure 1;
- la Figure 4 est une vue en coupe suivant la ligne 4-4, à plus grande échelle, de l'accoudoir et de la garniture d'habillage représentés à la Figure 1 ; et
- la Figure 5 est une vue en coupe suivant la ligne 5-5, à plus grande échelle, de l'accoudoir et de la garniture d'habillage représentés à la Figure 1.

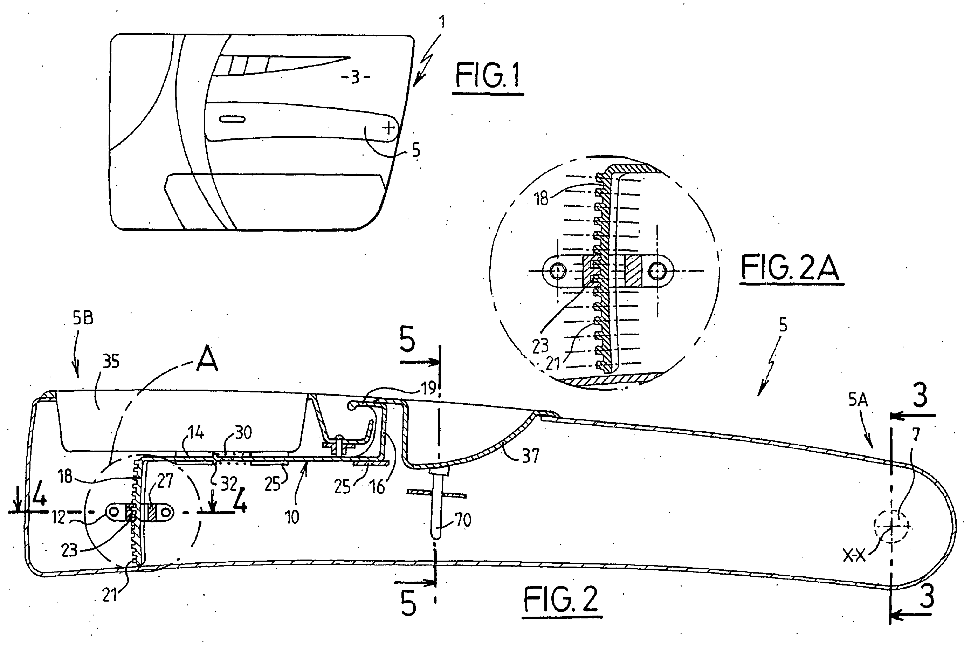

A la Figure 1, on a représenté schématiquement une porte 1 de véhicule automobile, recouverte du côté de l'intérieur du véhicule d'une garniture d'habillage 3, réalisée par exemple en matériau plastique rigide moulé, et comportant de ce même côté un accoudoir 5 de forme allongée suivant un axe sensiblement horizontal orienté suivant l'axe longitudinal du véhicule.

On a représenté à la Figure 2, une coupe de l'accoudoir 5 dans un plan médian longitudinal contenant cet axe.

L'accoudoir 5 est monté pivotant sur la garniture d'habillage 3 solidaire d'une paroi intérieure de porte (non représentée), par l'intermédiaire d'un organe de liaison 7 situé dans une région d'extrémité arrière 5A de l'accoudoir 5. L'organe de liaison 7 définit une liaison pivot autour d'un axe transversal sensiblement horizontal X-X, de sorte que l'accoudoir 5 soit susceptible de débattement angulaire par rapport à la porte 1 et à la garniture d'habillage 3.

L'accoudoir 5 comporte d'autre part un organe de verrouillage 10 destiné à bloquer l'accoudoir 5 dans une position angulaire déterminée autour de l'axe X-X, par rapport à la garniture d'habillage 3. L'organe de verrouillage 10 coopère avec une pièce d'arrêt complémentaire 12 solidaire de la paroi.

L'organe de verrouillage 10 se présente sous la forme d'une tige 14 montée coulissante dans une direction longitudinale par rapport à l'accoudoir 5, pourvue à chacune de ses extrémités d'une branche orthogonale 16,18, la première 16 étant orientée vers le haut et présentant une partie 19 affleurant à la surface supérieure de l'accoudoir pour constituer une partie de manoeuvre accessible à un utilisateur, et la deuxième 18 étant orientée vers le bas. La deuxième branche 18 présente une série de dents 21 décalées verticalement, réparties sur sa hauteur et tournées vers l'arrière, en regard d'une paire de crans 23 complémentaires formés sur la pièce d'arrêt 12.

La tige 14 est montée coulissante dans un guide 25 solidaire de l'accoudoir 5, de façon que les dents 21 puissent être engagées dans les crans 23 correspondants, respectivement désengagées des crans 23, suivant un mouvement relatif longitudinal vers l'avant, respectivement vers l'arrière de l'accoudoir.

Comme cela sera mieux vu sur la Figure 2A, les dents 21 présentent une orientation sensiblement radiale par rapport à l'axe de pivotement de l'accoudoir X-X, dé façon que le verrouillage et le déverrouillage puissent s'effectuer quelle que soit la position angulaire de l'accoudoir 5 autour de cet axe X-X, c'est-à-dire quelles que soient les dents 21 positionnées en regard des crans 23 préalablement au mouvement d'engagement.

La pièce d'arrêt 12 présente, en regard des crans 23, une face de butée 27 limitant le mouvement longitudinal de la branche 18 dans la pièce d'arrêt 12.

Par ailleurs, le désengagement des dents 21 des crans 23 s'effectue à l'encontre de l'effort de rappel longitudinal exercé par un ressort de rappel 30 sur la tige 14. Le ressort de rappel 30 est solidaire par l'une de ses extrémités d'une partie de guide 25, et par l'autre de ses extrémités, d'une collerette 32 formée sur la tige 14.

Dans la région d'extrémité avant 5B de l'accoudoir 5, une platine de commande 35 est intégrée dans l'accoudoir, cette platine comprenant des organes de commande, notamment électriques, d'accessoires tels que des moteurs de lève-vitres, actionneurs de sièges ou autres.

Dans une région intermédiaire, sur une face supérieure de l'accoudoir 5, est disposée une poignée d'accoudoir 37 permettant de manoeuvrer la porte. La poignée 37 a la forme d'une coupelle creuse s'insérant dans un évidement complémentaire formé dans la surface d'appui de l'accoudoir 5. Elle permet à un utilisateur de saisir l'accoudoir en y glissant l'extrémité des doigts, et de fermer la porte de l'intérieur du véhicule en exerçant une traction sur la poignée 37.

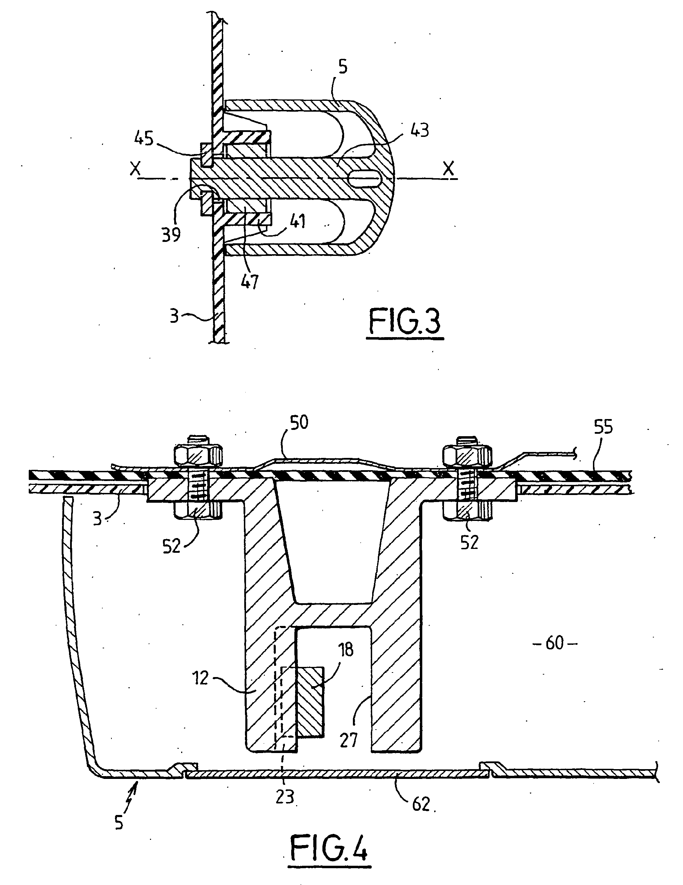

A la Figure 3, on a représenté une vue de détail de la liaison pivot entre l'accoudoir 5 et la garniture d'habillage 3 de la paroi de porte. La garniture d'habillage 3 présente un trou 39 entouré d'une cheminée 41 réalisée d'une pièce avec le panneau 3 et tournée vers l'intérieur du véhicule. L'accoudoir 5 offre un volume intérieur creux dans lequel s'étend un arbre 43 cylindrique destiné à coopérer avec le trou 39, transversalement et coaxialement avec la cheminée 41. Une extrémité libre de l'arbre 43 est insérée dans le trou 39 et dépasse de la paroi formée par la garniture d'habillage 3, l'arbre 43 étant bloqué en translation par rapport à ladite garniture d'habillage 3 par une rondelle de blocage 45 prise dans une gorge de l'arbre 43. Une bague de friction 47 est disposée dans le volume séparant la surface extérieure de l'arbre 43 de la surface intérieure de la cheminée 41, de façon que la surface intérieure de la bague de friction 47 porte sur l'arbre 43 et sa surface externe porte sur la face interne de la cheminée 41. La bague de friction 47 est réalisée dans un matériau élastique souple, tel que du caoutchouc, de façon à offrir un couple résistant au pivotement de l'arbre 43, et solidairement de l'accoudoir 5, par rapport à la garniture d'habillage 3 autour de l'axe X-X. Cette disposition a pour but de compenser notamment le poids de l'accoudoir lorsque l'organe de verrouillage 10 est dégagé des crans 23, afin d'éviter d'une part que l'accoudoir ne s'affaisse en l'absence d'effort de rétention de la part de l'utilisateur, et d'autre part ne nécessite un effort de rétention trop important.

A la Figure 4, qui est une vue en coupe dans un plan horizontal de la pièce d'arrêt 12 notamment, on voit que la pièce d'arrêt 12 est formée d'une pièce en H dont les branches enserrent la deuxième branche 18 de l'organe de verrouillage 10, entre les crans 23 et la face de butée 27. La pièce d'arrêt 12 est solidarisée à une plaque métallique de fixation 50 fixée à la paroi (non représentée) de la porte, au moyen de vis 52. Une feuille d'étanchéité 55 est, de façon classique, interposée entre la garniture d'habillage 3 et la paroi de la porte, cette feuille d'étanchéité 55 étant enserrée également entre la plaque de fixation 50 et la pièce d'arrêt 12.

La pièce d'arrêt 12, de même que l'organe de verrouillage 10, s'étend dans le volume intérieur 60 creux de l'accoudoir 5, ledit volume intérieur 60 étant accessible depuis l'intérieur du véhicule par une trappe d'accès 62 amovible, montée sur une face latérale de l'accoudoir 5 en regard de la pièce d'arrêt 12 et de la branche dentée 18 de l'organe de verrouillage 10. Cette trappe d'accès 62 est destinée à faciliter les opérations de maintenance sur le dispositif de verrouillage complet ou à permettre le démontage des vis 52, et par conséquent de l'accoudoir par rapport à la paroi de porte.

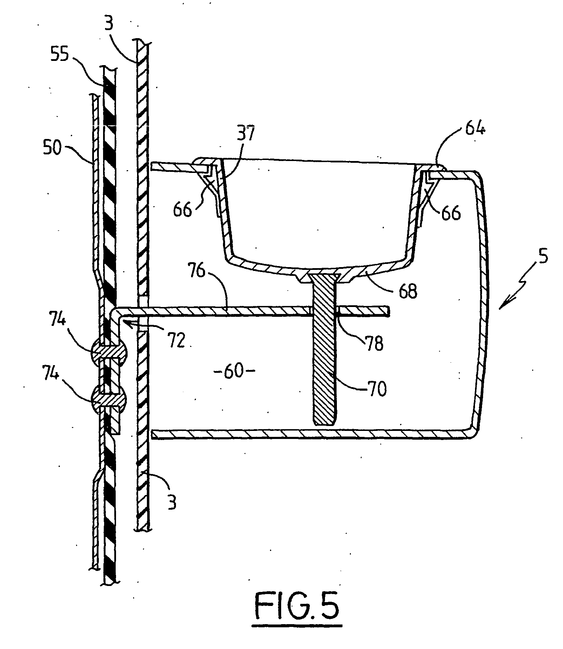

A la Figure 5, on a représenté plus en détail la poignée d'accoudoir 37 et son dispositif de fixation par rapport à la paroi de porte. Afin d'éviter une déformation de l'accoudoir et des efforts d'arrachement trop importants au niveau de ses points de fixation, on prévoit généralement que les efforts exercés sur la poignée de l'accoudoir 37 soient directement transmis à la paroi de porte. L'accoudoir suivant l'invention étant réglable en position angulaire, il faut donc prévoir une poignée d'accoudoir 37 qui puisse être déplacée solidairement avec l'accoudoir 5, mais également assurer la transmission des efforts de traction vers la paroi de porte quelle que soit la position angulaire de l'accoudoir 5.

Dans ce but, la poignée d'accoudoir 37 est emmanchée à force dans l'évidemént complémentaire de l'accoudoir 5 et maintenue en position au moyen d'une collerette de butée 64 portant sur la surface d'appui de l'accoudoir, et de crans 66. La poignée 37 comporte d'autre part une paroi inférieure 68 solidaire d'une tige 70 en arc de cercle centré sur l'axe de pivotement X-X de l'accoudoir. Cette forme en arc de cercle de la tige 70 est visible sur la Figure 2. D'autre part, la plaque métallique de fixation 50 est rigidement fixée à une équerre 72 de transmission de force au moyen de rivets 74 en enserrant la feuille d'étanchéité 55. L'équerre 72 présente un bras sensiblement horizontal 76 sous la forme d'une plaque dont une région d'extrémité libre est perforée. Le trou 78 correspondant est disposé au droit de la tige 70 et présente des dimensions adaptées pour que la tige 70 puisse coulisser librement, mais avec un jeu faible.

On conçoit que l'équerre 72 et les rivets 74 transmettent les efforts de traction horizontaux appliqués sur la poignée d'accoudoir 37 par un utilisateur à la plaque de fixation 50, et ce quelle que soit la position angulaire de l'accoudoir 5. En effet, lorsque l'on déplace angulairement l'accoudoir, la tige 70 coulisse, dans un sens ou dans l'autre suivant un arc de cercle centré sur l'axe de pivotement X-X de l'accoudoir, dans le trou 78 du bras horizontal 76 de l'équerre 72. Les efforts de traction horizontaux sont ainsi transmis au bras horizontal 76 lorsque, suite à une légère déformation de l'accoudoir 5, la tige 70 bute sur un bord du trou 78.

Le dispositif tel que décrit précédemment fonctionne de la façon suivante : on comprend qu'un utilisateur qui veut régler la position angulaire de l'accoudoir 5 par rapport à son axe de pivotement X-X doit tirer.la partie de manoeuvre 19 vers l'arrière de façon à désengager les dents 21 des crans 23, orienter l'accoudoir 5 suivant sa préférence autour de l'axe X-X et placer les dents 21 correspondant à son choix de position en regard des crans 23, et relâcher la partie de manoeuvre 19 de façon que le ressort de rappel 30 rappelle la tige 14 dans une position de repos et provoque l'engagement des dents sélectionnées 21 dans les crans 23. L'accoudoir est alors de nouveau verrouillé dans une position fixe autour de l'axe de pivotement X-X.

L'invention qui vient d'être décrite présente l'avantage d'un réglage angulaire de la position d'un accoudoir de porte ou plus généralement de paroi de véhicule, par des manipulations rapides, grâce à un dispositif de verrouillage et de sélection mettant en jeu des pièces mécaniques simples et peu coûteuses. L'accoudoir peut être réglé suivant un nombre de positions limitées, ces positions étant prédéterminées, ce qui offre un bon compromis entre la précision du réglage et la complexité des moyens mis en jeu.

La disposition de l'organe de verrouillage et de sélection, plus particulièrement la position de la partie de manoeuvre de cet organe, procure une ergonomie d'excellente qualité, l'utilisateur ayant à sa disposition sur une surface d'accoudoir des commandes électriques d'accessoires disposées dans la platine de commande et une commande mécanique de position d'accoudoir. Le réglage de la position dé l'accoudoir peut ainsi être effectué sans mouvement superflu de l'utilisateur par rapport à sa position normale.

## Revendications

1. Accoudoir de paroi intérieure de véhicule automobile, notamment de porte, de forme allongée suivant un axe principal longitudinal, présentant une première région d'extrémité (5A) selon cet axe, et relié à la paroi par l'intermédiaire d'un organe de liaison (7), l'organe de liaison (7) définissant une liaison pivot autour d'un axe (X-X) transversal sensiblement horizontal, permettant un débattement angulaire de l'accoudoir (5) par rapport à la paroi, l'accoudoir (5) comportant un organe de verrouillage (10) coopérant avec une pièce d'arrêt (12) solidaire de la paroi, adapté pour maintenir de façon modifiable l'accoudoir (5) dans une position angulaire sélectionnée, **caractérisé en ce que** l'organe de liaison (7) est situé dans ladite première région d'extrémité (5A).

2. Accoudoir suivant la revendication 1, **caractérisé en ce que** la pièce d'arrêt (12) et l'organe de verrouillage (10) comportent des crans (23) et des dents (21) complémentaires, radiaux par rapport à l'axe de pivotement (X-X), lesdits crans (23) et dents (21) présentant plusieurs positions relatives et étant accouplés et désaccouplés suivant un mouvement relatif de translation sensiblement longitudinal.

3. Accoudoir suivant la revendication 2, **caractérisé en ce que** la pièce d'arrêt (12) comporte au moins un cran (23), tandis que l'organe de verrouillage (10) comporte une pluralité de dents (21).

4. Accoudoir suivant la revendication 2 ou 3, **caractérisé en ce que** la pièce d'arrêt (12) est fixe par rapport à la paroi et l'organe de verrouillage (10) comprend une tige (14) coulissante par rapport à l'accoudoir (5) suivant une direction sensiblement longitudinale.

5. Accoudoir suivant la revendication 4, **caractérisé en ce qu'**un ressort de rappel (30) agissant dans la direction de coulissement de la tige (14) relie ladite tige à l'accoudoir (5), de façon à appliquer un effort tendant à accoupler les crans (23) et dents (21).

6. Accoudoir suivant la revendication 4 ou 5, **caractérisé en ce que** l'accoudoir (5) présente un volume intérieur creux (60) dans lequel s'étendent la pièce d'arrêt (12) et au moins une partie (18) de l'organe de verrouillage (10) portant les dents (21), une partie d'extrémité (19) de la tige (14) débouchant sur une face supérieure de l'accoudoir (5) de façon à constituer un organe de manoeuvre.

7. Accoudoir suivant l'une quelconque des revendications 1 à 6, **caractérisé en ce que** l'organe de liaison (7) comporte un arbre (43) monté rotatif dans un trou complémentaire (39) d'une pièce de fixation (3) solidaire de la paroi, et une bague de friction (47) emmanchée sur ledit arbre (43) et portant sur une paroi attenante de la pièce de fixation (3) de façon à exercer un couple résistant à l'encontre du pivotement de l'accoudoir (5) par rapport à la paroi.

8. Accoudoir suivant la revendication 7, **caractérisé en ce que** la bague de friction (47) est réalisée dans un matériau élastique souple, notamment du caoutchouc.

9. Accoudoir suivant l'une quelconque des revendications 1 à 8, **caractérisé en ce que** l'accoudoir (5) comporte un organe de préhension (37) solidaire, qui présente une tige (70) en arc de cercle centré sur l'axe de pivotement (X-X) de l'accoudoir (5), engagée dans un trou (78) ménagé dans un bras sensiblement horizontal (76) d'une pièce de transmission de force (72) solidaire de la paroi, de façon que la tige (70) puisse coulisser librement dans le trou (78) avec un faible jeu radial.

10. Accoudoir suivant la revendication 9, **caractérisé en ce que** l'organe de préhension (37) est une pièce rapportée creuse fixée à l'accoudoir (5) dans un évidement complémentaire, la tige (70) étant orientée vers le bas et s'étendant pour l'essentiel dans un évidement d'accoudoir (60) adapté pour recevoir au moins la partie perforée du bras (76) de la pièce de transmission de force (72).

11. Véhicule automobile comportant un accoudoir suivant l'une quelconque des revendications 1 à 10.

## Claims

1. Arm rest for an inside wall of a motor vehicle, especially for a door, of elongate shape following a main longitudinal axis, the arm rest having a first end region (5A) along that axis and being connected to the wall by way of a connection member (7), the connection member (7) defining a pivot connection about a substantially horizontal transverse axis (X-X) allowing angular movement of the arm rest (5) relative to the wall, the arm rest (5) comprising a locking member (10) which co-operates with a stop piece (12) secured to the wall and which is arranged to maintain the arm rest (5) in a selected angular position in modifiable manner, **characterised in that** the connection member (7) is located in said first end region (5A).

2. Arm rest according to claim 1, **characterised in that** the stop piece (12) and the locking member (10) have notches (23) and complementary teeth (21) arranged in a radial direction relative to the pivot axis (X-X), said notches (23) and teeth (21) having a plurality of relative positions and being engaged and disengaged by means of a relative, substantially longitudinal translational movement.

3. Arm rest according to claim 2, **characterised in that** the stop piece (12) has at least one notch (23) whereas the locking member (10) has a plurality of teeth (21).

4. Arm rest according to claim 2 or 3, **characterised in that** the stop piece (12) is fixed relative to the wall, and the locking member (10) has a shank (14) which is arranged to slide relative to the arm rest (5) in a substantially longitudinal direction.

5. Arm rest according to claim 4, **characterised in that** a return spring (30) acting in the sliding direction of the shank (14) connects said shank to the arm rest (5) so as to apply a force tending to engage the notches (23) and teeth (21).

6. Arm rest according to claim 4 or 5, **characterised in that** the arm rest (5) has a hollow internal space (60), in which there are arranged the stop piece (12) and at least that part (18) of the locking member (10) which bears the teeth (21), an end part (19) of the shank (14) emerging at an upper face of the arm rest (5) so as to form an operating member.

7. Arm rest according to any one of claims 1 to 6, **characterised in that** the connection member (7) comprises a shaft (43), which is rotatably mounted in a complementary hole (39) in a fixing piece (3) secured to the wall, and a friction ring (47), which is mounted on said shaft (43) and which bears against an adjacent wall of the fixing piece (3) so as to exert a moment which resists pivoting of the arm rest (5) relative to the wall.

8. Arm rest according to claim 7, **characterised in that** the friction ring (47) is made from a flexible resilient material, especially rubber.

9. Arm rest according to any one of claims 1 to 8, **characterised in that** the arm rest (5) comprises an associated member for grasping (37), which has a shank (70) in the shape of an arc of a circle centred on the pivot axis (X-X) of the arm rest (5), which shank (70) engages in a hole (78) provided in a substantially horizontal arm (76) of a force transmission piece (72) secured to the wall, so that the shank (70) can slide freely within the hole (78) with a small amount of radial play.

10. Arm rest according to claim 9, **characterised in that** the member for grasping (37) is an attached hollow piece fixed to the arm rest (5) in a complementary recess, the shank (70) being oriented downwards and extending substantially into an arm rest recess (60) arranged to receive at least the perforate part of the arm (76) of the force transmission piece (72).

11. Motor vehicle including an arm rest according to any one of claims 1 to 10.

## Patentansprüche

1. Armlehne für eine Kraftfahrzeuginnenwand, insbesondere eine Tür, mit einer in einer Hauptlängsachse langgestreckten Form, die einen ersten Endbereich (5A) gemäß dieser Achse aufweist und mit der Wand über ein Verbindungsorgan (7) verbunden ist, das eine Schwenkverbindung um eine im wesentlichen horizontale Querachse (X-X) bildet, die eine Winkelbewegung der Armlehne (5) bezüglich der Wand gestattet, wobei die Armlehne (5) ein Verriegelungsorgan (10) aufweist, das mit einem mit der Wand fest verbundenen Sperrteil (12) zusammenwirkt und dafür ausgelegt ist, die Armlehne (5) veränderlich in einer gewählten Winkelstellung zu halten, **dadurch gekennzeichnet, dass** das Verbindungsorgan (7) in dem ersten Endbereich (5A) gelegen ist.

2. Armlehne nach Anspruch 1, **dadurch gekennzeichnet, dass** das Sperrteil (12) und das Verriegelungsorgan (10) Kerben (23) und ergänzende Zähne (21) aufweisen, die bezüglich der Schwenkachse (X-X) radial sind und die mehrere Stellungen zueinander besitzen und in einer im wesentlichen längs gerichteten Translationsbewegung zueinander ein- und ausgekuppelt werden.

3. Armlehne nach Anspruch 2, **dadurch gekennzeichnet, dass** das Sperrteil (12) mindestens eine Kerbe (23) aufweist, während das Verriegelungsorgan (10) eine Vielzahl von Zähnen (21) aufweist.

4. Armlehne nach Anspruch 2 oder 3, **dadurch gekennzeichnet, dass** das Sperrteil (12) bezüglich der Wand feststehend ist und das Verriegelungsorgan (10) eine Stange (14) aufweist, die bezüglich der Armlehne (5) in einer im wesentlichen längs gerichteten Richtung verschiebbar ist.

5. Armlehne nach Anspruch 4, **dadurch gekennzeichnet, dass** eine Rückholfeder (30), die in der Gleitrichtung der Stange (14) wirkt, diese Stange mit der Armlehne (5) so verbindet, dass sie eine Kraft anlegt, die bestrebt ist, die Kerben (23) und zähne (21) einzukuppeln.

6. Armlehne nach Anspruch 4 oder 5, **dadurch gekennzeichnet, dass** die Armlehne (5) ein hohles Innenvolumen (60) aufweist, in dem sich das Sperrteil (12) und mindestens ein die Zähne (21) tragender Teil (18) des Verriegelungsorgans (10) erstreckt, wobei ein Endteil (19) der Stange (14) auf einer Oberseite der Armlehne (5) so ausmündet, dass er ein Betätigungsorgan bildet.

7. Armlehne nach einem der Ansprüche 1 bis 6, **dadurch gekennzeichnet, dass** das Verbindungsorgan (7) eine Welle (43), die in einer ergänzenden Bohrung (39) eines mit der Wand fest verbundenen Befestigungsteils (3) drehbar montiert ist, und einen Reibring (47) aufweist, der auf diese Welle (43) aufgepresst ist und an einer angrenzenden Wand des Befestigungsteils (3) anliegt, so dass ein Widerstandsmoment gegen das Verschwenken der Armlehne (5) bezüglich der Wand ausgeübt wird.

8. Armlehne nach Anspruch 7, **dadurch gekennzeichnet, dass** der Reibring (47) aus einem biegsamen elastischen Werkstoff, insbesondere Gummi, hergestellt ist.

9. Armlehne nach einem der Ansprüche 1 bis 8, **dadurch gekennzeichnet, dass** die Armlehne (5) ein fest verbundenes Greiforgan (37) aufweist, das eine Stange (70) in Form eines auf der Schwenkachse (X-X) der Armlehne (5) zentrierten Kreisbogens besitzt, die in eine Bohrung (78) eingeführt ist, die in einem im wesentlichen horizontalen Arm (76) eines mit der Wand fest verbundenen Kraftübertragungsteils (72) vorgesehen ist, so dass die Stange (70) in der Bohrung (78) mit einem leichten radialen Spiel frei gleiten kann.

10. Armlehne nach Anspruch 9, **dadurch gekennzeichnet, dass** das Greiforgan (37) ein hohles angebrachtes Teil ist, das an der Armlehne (5) in einer ergänzenden Aussparung befestigt ist, wobei die Stange (70) nach unten gerichtet ist und sich im wesentlichen in einer Armlehnenaussparung (60) erstreckt, die dafür ausgelegt ist, mindestens den durchbohrten Teil des Arms (76) des Kraftübertragungsteils (72) aufzunehmen.

11. Kraftfahrzeug mit einer Armlehne nach einem der Ansprüche 1 bis 10.
